# EUROPEAN PATENT APPLICATION

(11) **EP 2 180 718 A1**
(43) Date of publication of application: **28.04.2010**
(21) Application number: 08253438.9
(22) Date of filing: 22.10.2008
(51) Int. Cl.: H04R 1/02

(54) **Item mounting system**

(71) Applicant: Armour Home Electronics Limited, Woking Surrey GU21 5SA (GB)
(72) Inventor: Abraham, Robert, Woking, Surrey GU21 5SA (GB); Dunk, Kieron, Woking, Surrey GU21 5SA (GB); Jones, Anthony, Woking, Surrey GU21 5SA (GB)
(74) Representative: Wood, Graham

(57) **Abstract**

The invention relates to mounting apparatus to allow items, typically audio speakers to be mounted, and be positionable with respect to, a television set or display screen. At least one of a plurality of speakers is adjustable in position with respect to location means of the apparatus and the speakers and location means are adjustable with respect to fixing means of the apparatus.

## Description

The invention to which this application relates is to apparatus which can be used in the mounting of one, or more typically a plurality of, items such as speakers in a spaced relationship and which relationship can be adjusted to suit specific audio and/or other parameters.

The provision of speakers which are used to generate audio in conjunction with a display screen via which video is displayed is a fundamental property of a television set. Conventionally, any television will include a display screen in a housing in which at least one speaker is also provided as an integral part to form the television set. Increasingly the televisions which are being sold have a flat panel form of display such as a plasma or LCD screen which means that the television sets can, for example, be mounted on a wall surface or on a stand.

A common problem with television sets is that the speakers which are provided as integral parts of the same are often of a relatively poor quality. This can mean that while the video display is of a high standard, the audio quality is not of the same standard. This can often mean that users of the television will wish to install and connect additional speakers so as to obtain the full benefit of the audio signals or data being received by the receiving means provided within, or connected to the television set.

A problem with the connection of the speakers is that a plurality of speakers are required to be mounted adjacent the screen to obtain the best effect, these typically being a first speaker which is mounted centrally of the screen with regard to the width of the television set and second and third speakers which are mounted, respectively, to the right and left of the first speaker and spaced therefrom.

While this can be achieved using conventional mounting apparatus, a problem which is experienced is that there is a large range of sizes of display screens which are available to buy and therefore, conventionally, to allow the speakers to be mounted in an effective and visually appealing manner the user has to select a suitable one of a range of speaker mounting apparatus to suit the particular size of their television set. In fact, it is often the case that mounting apparatus of the appropriate size is not available at all. A further problem is that the depth of the front of the television set from the wall on which the same is mounted can vary from television to television and may also depend on the particular television set mounting apparatus used. This again can mean that there is a visible difference between the plane of the front surface of the television set and the plane of the front surface of the speakers mounted adjacent thereto, which is visually unappealing.

The aim of the present invention is to provide apparatus which allows one or a plurality of speakers to be mounted and to provide the apparatus in a form which allows the position of the same to be adaptable in at least one, but more typically a combination, of axes so as to allow the speakers to be located in an optimum position with respect to the use of the speakers and/or with respect to a television set or display screen adjacent to which the speakers are mounted.

In a first aspect of the invention there is provided apparatus for locating and mounting a plurality of audio speakers thereon, said apparatus including a location means for receipt and location of each of the speakers along a substantially linear axis, and at least one of said speakers is selectively positionable within a range along said axis.

In one embodiment the said axis along which the item can be moved is the longitudinal axis of the location means.

In one embodiment the items are speakers.

In one embodiment the location means includes a fixed location for a first speaker and adjustable positions for second and third speakers on either side thereof so that the spacing between the fixed speaker and the second and third speakers can be adjusted.

In one embodiment the fixed speaker is mounted substantially centrally of the location means and the spacing of the speakers to either side can be selected to be substantially identical.

In one embodiment, when the mounting apparatus is being used in conjunction with a television set and mounted adjacent thereto, the second and third speakers can be adjustably moved such that the respective outer faces of the same lie substantially flush with the side edges of the television.

In one embodiment the mounting apparatus is provided with a rear fixing means via which the apparatus is mounted to a support, such as a wall, or stand.

In one embodiment the rear fixing means is offset from the location means and the distance of offset is selectively adjustable. This arrangement allows the spacing of the front face of the speakers from the support to be adjustable.

In one embodiment the location means are connected to the fixing means via a plurality of arms, said arms pivotally movable about pivot points at the ends of the same , and at least one end of the arms is slidably movable, so as to allow the adjustment of the spacing between the fixing means and the location means to be achieved. Thus, in this embodiment, the position of at least one of the speakers is adjustable with respect to first and second axis, a first axis along the location means, and a second axis perpendicular thereto.

Preferably each of the speakers is mounted on the location means via a single fixing point and the location means is provided in the form of a channel to provide support for the location of the speakers and along which the second and third speakers can be moved within a range of movement so as to allow adjustment to be achieved.

In one embodiment the speakers are provided with at least one passage which passes from the rear to the front through which connecting cables can be passed to allow the speakers to be connected to the audio receiving means. The channel leads to a recess at the front face of the speaker to allow the connection of the cables to the speaker to be achieved relatively easily. The recess can be provided with a cap which encloses the recess once the connection has been made.

In one embodiment the single fixing point is achieved by using a fastening means and typically access to the fastening means in order to tighten or loosen the same is via the recess in which the head of the fastening means is located.

In one embodiment the apparatus can be mounted such that the longitudinal axis of the location means is parallel with the width axis of the television set, or alternatively the longitudinal axis of the apparatus is parallel with the height axis of the television set adjacent thereto.

In one embodiment the apparatus is connected to a support to allow the speakers to be mounted, typically in conjunction with a television set also mounted onto the support, such as on a wall. Alternatively the apparatus may be located on a stand on which the television set is supported from a floor. In this arrangement additional support brackets may be required to connect the mounting apparatus to the stand.

Typically the mounting apparatus is provided with a front cover or grille (hereinafter referred to as a grille in a non limiting manner), said grille adjustable in size in at least one axis.

Typically the axis which is adjustable is that which runs parallel to the longitudinal axis of the location means of the mounting apparatus when the grille is fitted thereto.

The grille typically comprises a frame which is formed around the periphery of the grille and which supports a fabric or textile material which may be of the type conventionally used to form a grille for speakers. Preferably the fabric is elasticated at least around part of the periphery and is of a form, or is adapted, so as to attach to one part of hook and loop fastening means which are located on the frame.

In one embodiment the fabric has an inherent elasticity which is greater in one direction and the fabric is shaped such that when fitted to the frame the greater degree of elasticity is aligned with the axis along which the grille is adjustable.

Typically the frame includes a plurality of members which are interconnected and respectively slidable along their elongate axes so as to allow the frame to be adjusted.

Typically the range of adjustment of the grille is sufficient so as to allow the grille to be moved to a size which is equal to the maximum and minimum lengths of the adjustment of the spacing of the second and third speakers so as to allow the grille to be always adjustable to fit over the speakers and hence mask the front surface of the same.

The provision of the grille in this form therefore allows the speakers when mounted on the apparatus to be always capable of being masked by the grille regardless of the particular location adjustment performed on the speakers within the given range.

Typically the grille frame and mounting apparatus and/or speakers are provided with engagement means which allow the grille to be located on the apparatus.

In a further aspect of the invention there is provided mounting apparatus for a plurality of items in a spaced configuration said apparatus including a location means for said items and a rear fixing means via which the apparatus is mounted to a support wherein the rear fixing means is offset from the location means and the distance of offset is selectively adjustable.

In one embodiment the arrangement allows the spacing of the front face of the items from the supporting surface to be adjustable.

In one embodiment the location means are connected to the fixing means via a plurality of arms, said arms pivotally movable about pivot points at the ends of the same , and at least one end of the arms is slidably movable, so as to allow the adjustment of the spacing between the fixing means and the location means to be achieved.

In a third aspect of the invention there is provided a front cover or grille for a speaker wherein the said dimension of said grille is adjustable along at least one axis.

Typically the axis which is adjustable is the longest axis.

In one embodiment the grille comprises a frame which is formed around the periphery of the grille and which supports a fabric or textile material which may be of the type conventionally used to form a grille for speakers.

Preferably the fabric is elasticated at least around part of the periphery so as to be engageable with the frame.

Typically the range of adjustment of the frame is selected with respect to the fabric such that with the smallest size of frame the fabric is still held taut.

In one embodiment a portion of the fabric may be gathered and retained to the rear of the grille when the frame is at a smaller size within the range.

In one embodiment the fabric has an inherent elasticity which is greater in one direction and the fabric is shaped such that when fitted to the frame the greater degree of elasticity is aligned with the axis along which the grille is adjustable.

Typically the frame includes a plurality of members which are interconnected and respectively slidable along their elongate axes so as to allow the frame to be adjusted. Preferably the frame members are formed such that regardless of the particular adjustment position a substantially uniform external edge of the frame is formed thereby eliminating any viewable protrusions or recesses.

Typically the elongate members, at least along the extent of engagement with another member are provided with keying means so as to engage and guide the frame members during adjustment.

Typically the range of adjustment of the grille is sufficient so as to allow the grille to be moved to a size which is equal to the maximum and minimum lengths of the size of a range of speakers to which the grille is to be selectively fitted. This therefore avoids the need for separate tooling and manufacture of a range of grilles for a range of speakers which typically only vary in size along one dimension. In this embodiment the grilles can be factory set to the appropriate size and fitted to the speaker prior to shipping. Alternatively the grille may be provided to be adjustable by the end user.

In one embodiment the range of adjustment of the grille is sufficient so as to allow the same to be fitted along a plurality of speakers which are adjustably located on mounting apparatus.

Thus, provision of the grille in this form allows the speakers when mounted on the apparatus to be always capable of being masked by the grille regardless of the particular location adjustment performed on the speakers within the given range.

Typically the grille frame and mounting apparatus and/or speakers are provided with engagement mans which allow the grille to be located on the speaker or mounting apparatus.

In one embodiment the grille in accordance with the invention can be sold separately from the speaker to allow the same to be retrofitted to existing speakers by adjusting the size of the frame to suit.

In whichever embodiment the grille may include locking means such that when the frame has been adjusted to the appropriate size the locking means are engaged to prevent further movement of the frame.

Specific embodiments of the invention are now described with reference to the accompanying drawings wherein;
Figure 1 illustrates a problem which is experienced with conventional speaker mounting apparatus;
Figure 2 illustrates a first embodiment of the invention;
Figure 3 illustrates the embodiment of Figure 2 with a grille in accordance with the invention fitted;
Figure 4 illustrates a further problem experienced with conventional mounting apparatus;
Figure 5 illustrates a perspective view of apparatus in accordance with a first embodiment of the invention;
Figures 6a and b illustrate the use of the apparatus in accordance with the invention;
Figures 7a and b illustrate the apparatus in two embodiments in an exploded form;
Figures 8a-c illustrate plan views of the apparatus in three selected embodiments,
Figure 9 illustrates a further exploded form of the invention; and
Figures 10a and b illustrate a grille in accordance with one embodiment of the invention.

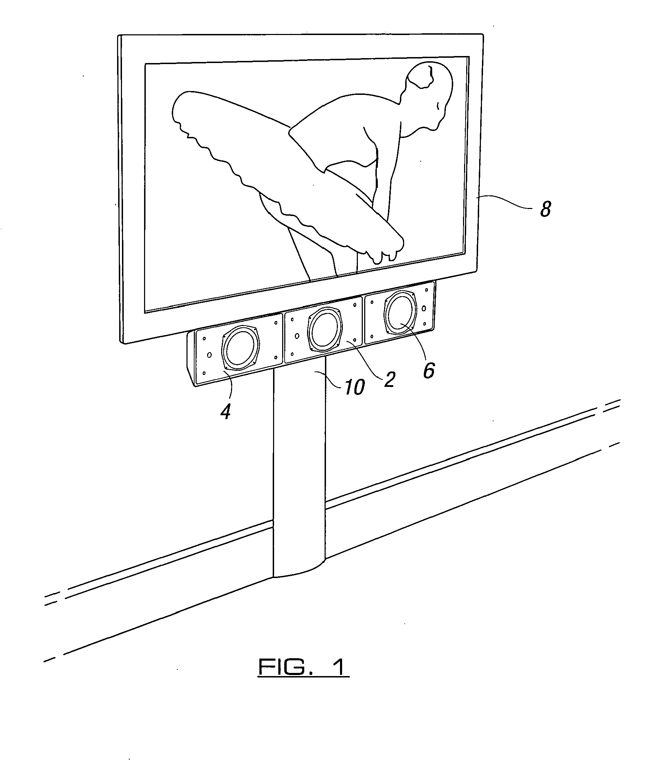

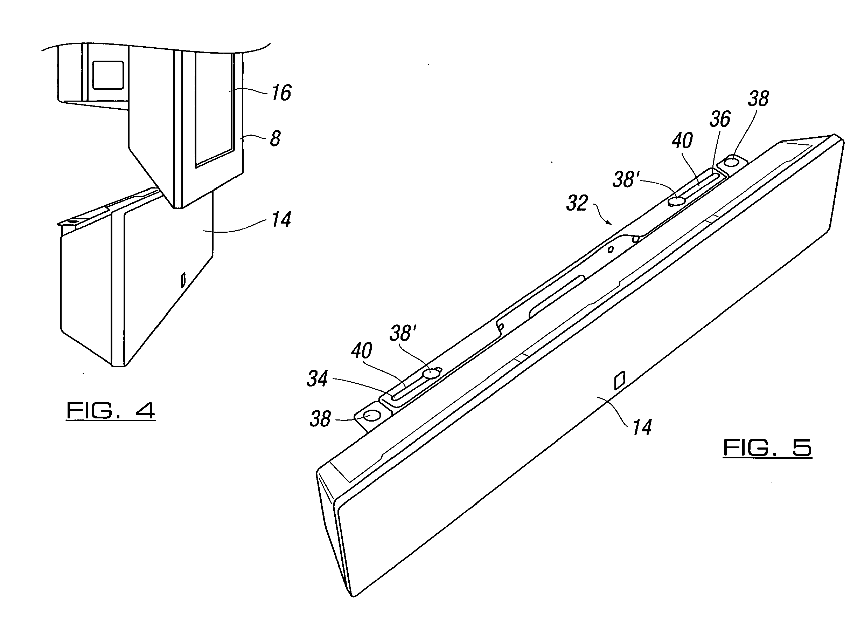

Referring firstly to Figures 1 and 4 there is illustrated mounting apparatus for a speaker arrangement in accordance with a conventional embodiment. In each case there is provided a plurality of speakers comprising a centrally mounted speaker 2 and right and left speakers 4, 6 which are mounted in conjunction with a display screen or television set 8.

In Figure 1 it is illustrated how the length of the mounting apparatus 10 is less than the length of the television set. This means that the speakers are unsightly and are not visually attractive and are not as effective as may be possible if the speakers 4,6 were spaced from speaker 2. In Figure 4 it is shown how the front face 14 of the speakers is not in line with the front face 16 of the television set which again is unsatisfactory.

The apparatus in accordance with this invention in the embodiments now described provides a solution to both of these problems.

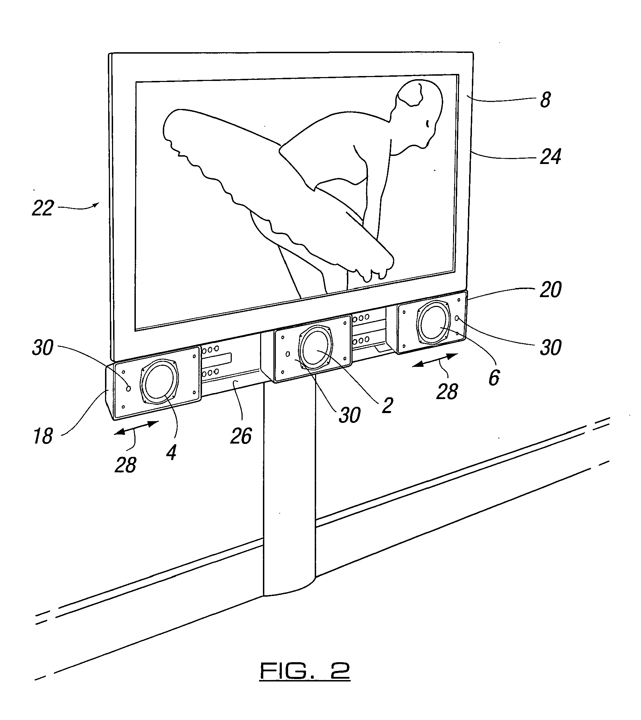

Referring now to Figure 2 there is provided an illustration of a particular configuration of the apparatus in accordance with the invention. It will be seen how the speakers 2, 4, 6 are now spaced apart with the speakers 4, 6 being moved to the right and left respectively of the centre speaker 2 so that the respective outer edges 18,20 of speakers 4, 6 are aligned with the edge faces 22, 24 of the television set 8.

The mounting apparatus itself includes a location means 26 which is formed as a substantially U shaped channel into which the speakers sit and along which the speakers 4, 6 are selectively movable as indicated by arrows 28.

The speakers can each be provided with a covered recess 30 via which, when a covering cap is removed, cable connections to the speakers can be made from the front of the speakers. Also it is preferred that the head portion of single point fastening means can be accessed in this recess to allow the position of the speakers 4,6 to be fixed on the location means when the position selection is made.

Thus it is shown how the speakers can be moved along the longitudinal axis of the location means 26 to allow the outer edges of the speakers 4,6 to be aligned with the outer edge of the television set which is mounted adjacent to the apparatus on a common support.

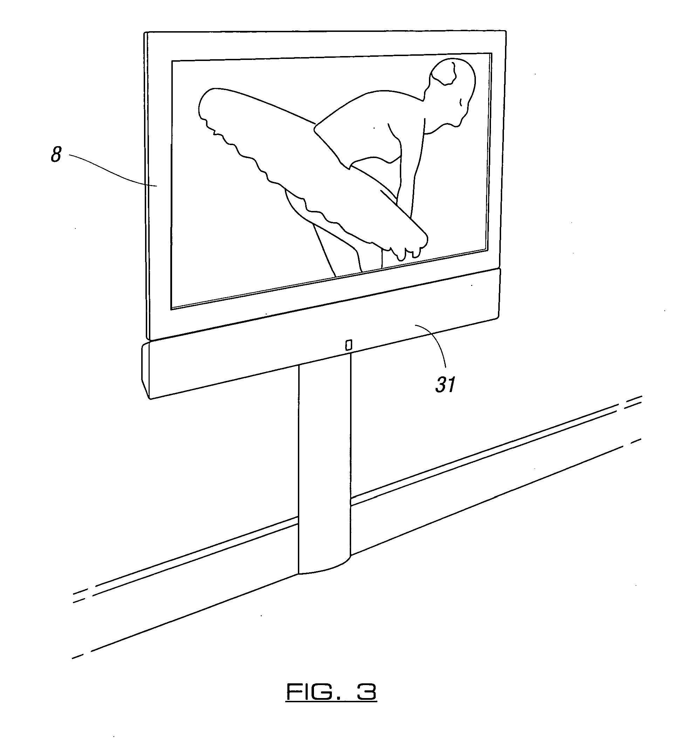

Figure 3 illustrates the arrangement of Figure 2 with grille 31 fitted to the front face of the speakers so as to provide an attractive visual appearance and the type of appearance which would be expected by a user of this apparatus.

Figure 5 illustrates a further view of the mounting apparatus of the invention and illustrates how the front face 14 of the speakers is offset from the fixing means of the apparatus in the form of plate 32.

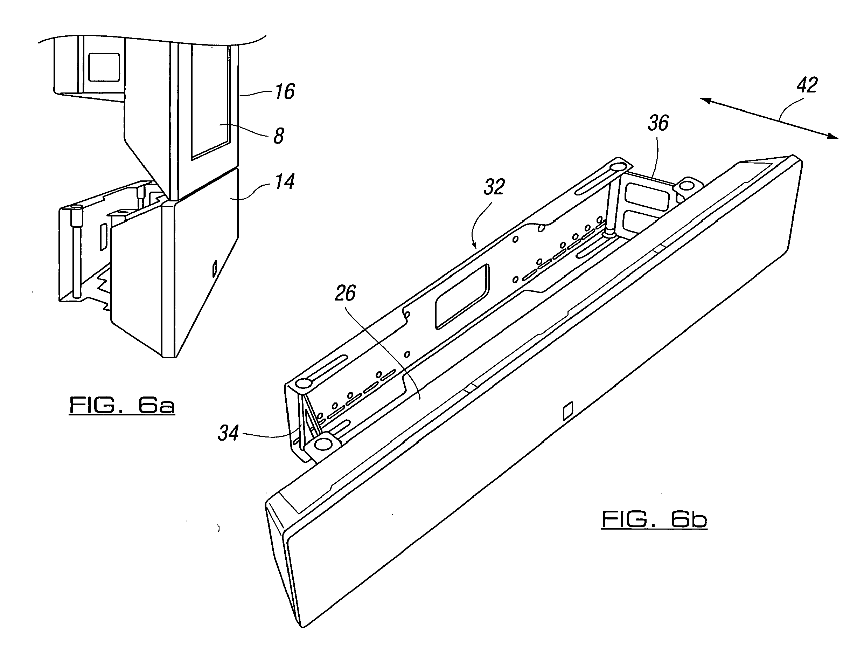

The location means are mounted to the fixing means via arms 34, 36 which are pivotally movable about pivot axes 38'. The pivot axes 38' are also slidable along respective slots, 40. The relative movement of the arms allow the depth or spacing between the location means and the fixing means to be adjustable. This in turn allows the plane in which the front face 14 of the speakers lies to be adjusted so as to bring it into line with the plane of the front face of the television set 8 as illustrated in Figure 6a, thereby overcoming the conventional problem shown in Figure 4.

Figure 6b illustrates how the adjustment to the depth can be made in the direction as illustrated by arrow 42.

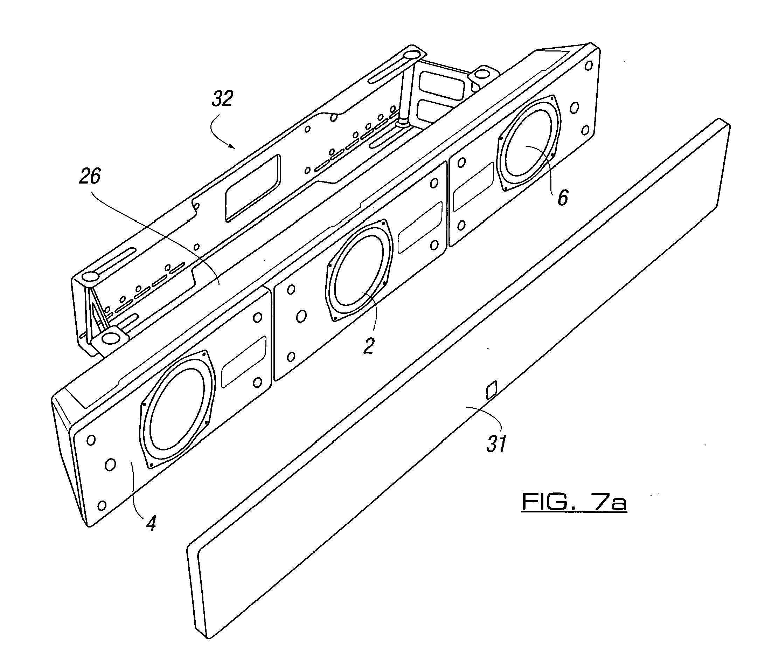

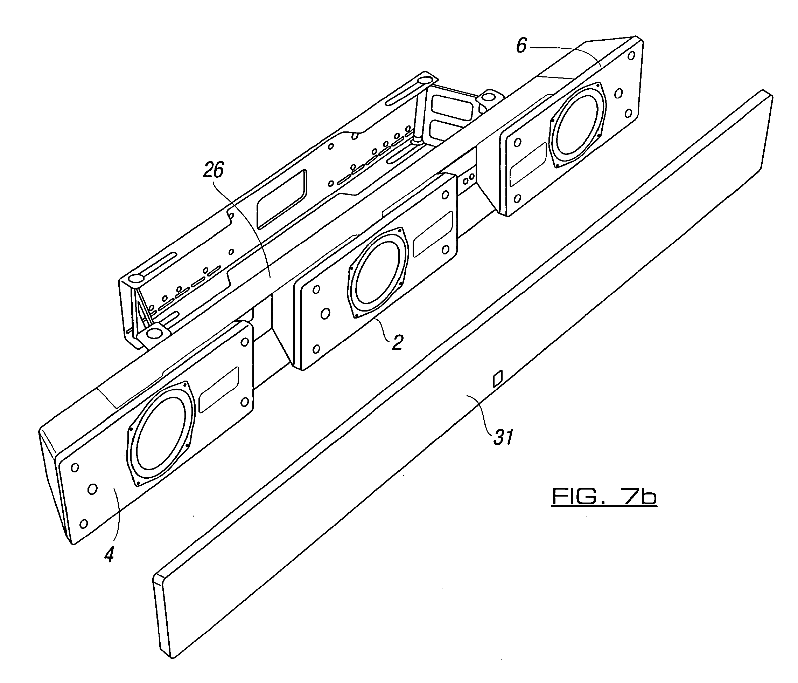

Figures 7a and 7b illustrate two configurations which are achievable using the apparatus of the invention. In the first configuration of Figure 7a the speakers 2,4,6 are shown side by side whereas in Figures 7b the speakers 2,4,6 are shown spaced apart. In both cases it will be noted that the grille 31 is of the required length so as to be fitted over the speakers. This variation in length of the grille is achieved by providing a frame formed of members which are slidably adjustable so as to allow the length of the grille to be adjusted to match the length between the external edges 18, 20 of the speakers 4,6. This therefore means that the grille can always be selectively adjusted to a size so as to mask the speakers and therefore provide the front face of the mounting apparatus.

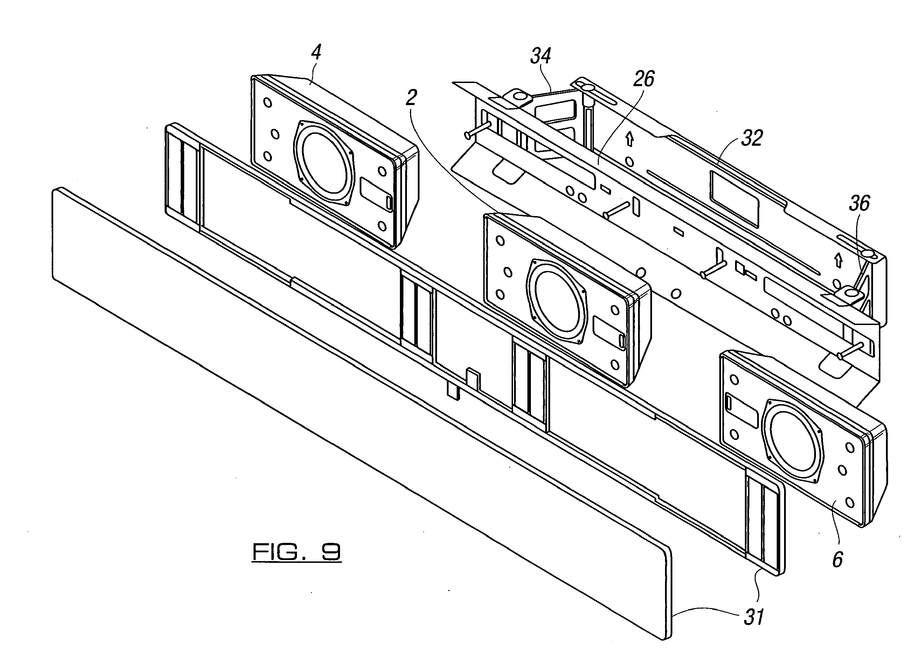

Figure 9 illustrates a more detailed configuration in which the various components used to construct the apparatus in accordance with one embodiment of the invention are shown.

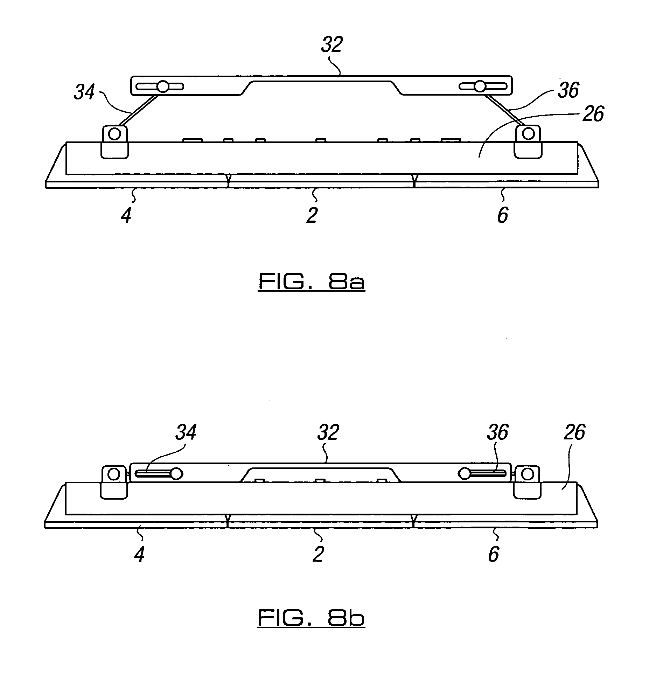

Figures 8a-c illustrate three mounting configurations which can be achieved using the apparatus in accordance with the invention. In Figure 8a the speakers 2,4, 6 are shown positioned in an abutting relationship, with each mounted and located in the location means 26. In addition the location means 26 are moved away from the fixing means plate 32 via arms 34, 36.

In Figure 8b the speakers 2,4,6 are in the same configuration but the location means 26 have been moved towards the fixing plate 32 so as to bring the same closer to the support in the form, typically of a wall as shown, or alternatively a stand on which the apparatus is mounted via on or more support arms (not shown).

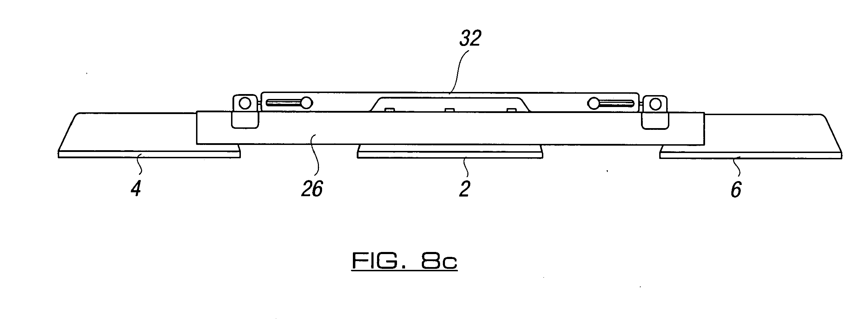

In Figure 8c the location means 26 and fixing plate 32 are provided in the same configuration as in Figure 8b but the speakers 2,46 are provided in a spaced configuration, with the speakers 4, 6 being moved away from the central speaker 2. I t will be appreciated from the Figure how a portion of each of the speakers 4, 6 may depend outwardly from the end of the location means to maximise the range of movement which can be achieved.

The grille 31 which is provided can be used to form the front face of the speakers mounted in accordance with the mounting apparatus of the invention but may also be used to be adjustable so as to form the front face of, for example, a range of speaker sizes.

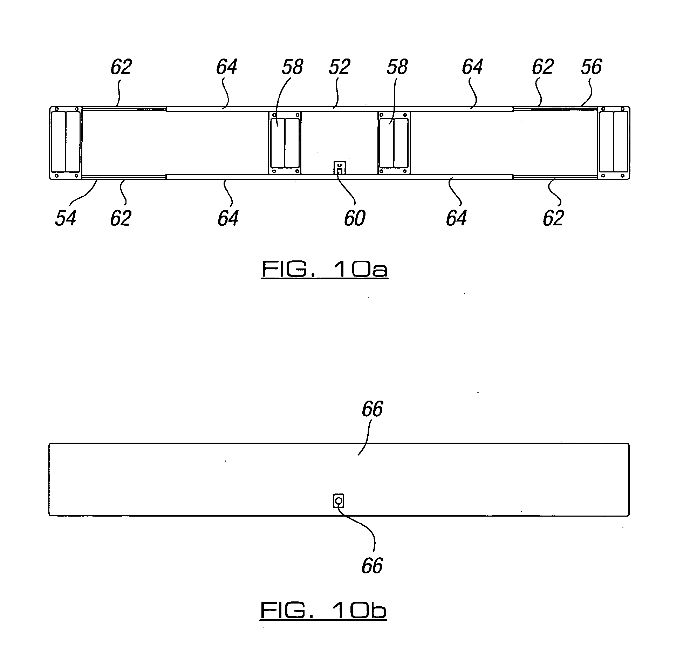

The grille frame 50 is shown in detail in Figure 10a. The frame comprises a body part 52. In this embodiment, at each end there is provided an adjustable portion 54, 56. The body portion includes members 58, which support the frame construction and which are spaced so as not to obscure the sound emitted from any of the speakers. A fixture 60 to which, for examples a manufacturer's logo can be attached, perhaps magnetically, is also provided.

The movable portions 54, 56 are provided with arms 62 which engage with arms 64 of the body portion and which are slidably movable. Typically the arms are provided such that one forms a channel along which the other is received. Preferably engagement means are also provided to ensure that the arms do not detach from one another and the profile of the arms are such that there is no significant bulging or protrusions at the interface between the end of one of the arms and the arm engaged therewith.

The range of movement can be selected such as to match the range of movement of the speakers which are to be masked or the range of speaker sizes. Once the appropriate size of the frame has been selected the frame can then be fitted using mechanical engagement means onto the location means of the mounting apparatus or, more typically, the speakers themselves.

Prior to this, the fabric 66 which is used to mask the speakers from view is placed across the frame so as cover the same as shown in Figure 10b. Any excess fabric is gathered to the rear face of the frame. Engagement means such as hook and loop fastening means can be provided to retain the fabric in position and also retain the fabric with the required tension so as to prevent the same from sagging or being unsightly. The manufacturers logo 68 is also shown in position on the fixture 60.

There is therefore provided apparatus which can be used to allow the adaptation of the mounting of speakers or indeed other items in first and second axes, so as to provide the speakers in an attractive manner and also to allow the effectiveness of the speakers to be increased with respect to the apparatus in conjunction with which the same is being used.

## Claims

1. Apparatus for locating and mounting a plurality of audio speakers, thereon, said apparatus including a location means for receipt and location of each of the speakers along a substantially linear axis, and at least one of said speakers is selectively positionable within a range along said axis.

2. Apparatus according to claim 1 wherein the said axis along which the at least one speaker can be moved is the longitudinal axis of the location means.

4. Apparatus according to claim 1 wherein the location means includes a fixed location for a first speaker and adjustable positions for second and third speakers on either side thereof so that the spacing between the fixed speaker and the second and third speakers can be adjusted.

5. Apparatus according to claim 4 wherein the fixed speaker is mounted substantially centrally of the location means and the spacing of the speakers to either side can be selected to be substantially identical.

6. Apparatus according to claim 1 wherein the apparatus is used in conjunction with a television set or display screen and mounted adjacent thereto.

7. Apparatus according to claim 6 wherein the speakers can be adjustably moved such that the outer edges of the outermost speakers lie substantially flush with the side edges of the television set or display screen.

8. Apparatus according to claim 1 wherein the mounting apparatus is provided with a rear fixing means via which the apparatus is mounted to a support, said rear fixing means offset from the location means and the degree of offset is selectively adjustable to allow adjustment of the spacing of the front face of the speakers from the support.

9. Apparatus according to claim 8 wherein the location means are connected to the rear fixing means via a plurality of arms, said arms pivotally movable about pivot points at the ends of the same , and at least one end of the arms is slidably movable, so as to allow the adjustment of the spacing between the rear fixing means and the location means to be achieved.

10. Apparatus according to claim 1 wherein the location means is provided in the form of a channel to provide support for the location of the speakers therewith and along which at least one speaker can be moved within a range of movement so as to allow adjustment to be achieved.

11. Apparatus according to claim 1 wherein the speakers are provided with at least one passage which passes from the rear to the front of the same and through which at least one connecting cable can be passed to allow the speaker to be connected to an audio source.

12. Apparatus according to claim 1 wherein at least one speakers are selectively positionable with respect to first and second, perpendicular axes.

13. Apparatus according to claim 12 wherein the first axis is along the location means along which at least one speaker and the speakers and location means are positionable along the second axis with respect to fixing means.

14. Apparatus according to claim 1 wherein the apparatus is provided with a cover or grille which is adjustable in size in at least one axis.

15. Apparatus according to claim 1 wherein the cover or grille typically comprises an adjustable frame which forms the periphery of the cover or grille and which supports a fabric or textile material.

16. Apparatus according to claim 15 wherein the fabric or textile has an inherent elasticity which is greater in one direction and the fabric is shaped such that when fitted to the frame the greater degree of elasticity is aligned with the axis along which the frame is adjustable.

17. Apparatus according to claim 15 wherein the frame includes a plurality of members which are interconnected and respectively slidable along their elongate axes so as to allow the frame to be adjusted.

18. Mounting apparatus for a plurality of audio speakers in a spaced configuration said apparatus including a locating means for said speakers and a rear fixing means via which the apparatus is mounted to a support wherein the rear fixing means is offset from the location means and the distance of offset is selectively adjustable.

19. Apparatus according to claim 18 wherein the arrangement allows the spacing of the front face of the speakers on said location means, from the support to be adjustable.

20. Apparatus in the form of a cover or grille for a plurality of speakers wherein the said dimension of said grille is adjustable along at least one axis.

21. Apparatus according to claim 20 wherein the cover or grill substantially masks from view the front face of the speakers and the spaces between the same.
